# EUROPEAN PATENT APPLICATION

(11) **EP 1 265 201 A1**
(43) Date of publication of application: **11.12.2002**
(21) Application number: 01304836.8
(22) Date of filing: 01.06.2001
(51) Int. Cl.: G07F 19/00

(54) **A mobile banking system**

(71) Applicant: Wong, Kam Fu, Shatin (CN)
(72) Inventor: Wong, Kam Fu, Shatin (CN)
(74) Representative: Meddle, Alan Leonard

(57) **Abstract**

A mobile banking system comprises a mobile banking unit (1) and a data processing centre (2) which may be the mainframe computer (2-1) of the bank responsible for processing banking transactions and data storage.

The mobile banking unit (1) includes one or more banking terminals (1-3), such as ATMs, deposit machines and or multi-media enquiry stations. The unit (1) is normally installed on a means of transport (1-1), such as a car, bus or train. Both the mobile banking unit (1) and the data processing centre (2) are equipped with wireless communication devices (1-2 and 2-2) based on one or more mobile telephones, with or without encryption devices and/or modems, so that the mobile telephone wireless network can be used to link up the mobile banking unit (1) and the data processing centre to perform all sorts of banking transactions. Using the mobile telephone wireless network to replace the leased telephone lines currently used for communication between branch banking terminals and the data processing centre should not only increase the flexibility of the bank in offering services to customers in terms of geographical coverage and hours of service but should also lower the overall operating costs of the bank.

## Description

**THIS INVENTION** relates to a banking system and, in particular, to a mobile banking system.

Commercial banks establish branch networks to expand their market coverage geographically and to compete for market share. This is particularly evident in the retail banking business. To offer computerised services to their customers, banks normally install banking terminals for transaction processing in their branches. These banking terminals are connected to a mainframe computer at a data centre of the bank via a leased data line for on-line transaction processing.

Establishing a branch network and the associated dedicated communication network via a leased line is very expensive and may limit the ability of the bank to expand. A mobile banking system with its low operating costs and mobility could enhance the ability of a bank to render banking services over a wide geographical area in order to expand the presence of the bank in the market-place.

The present invention aims to provide a bank with a low cost but versatile mobile banking system.

Accordingly, the invention provides a mobile banking system comprising a data processing centre for processing banking transactions and a remote banking unit having one or more banking terminals operable by a user to effect banking transactions, in which system the remote banking unit incorporates a wireless communication device including a mobile telephone by which the remote banking unit communicates with the data processing centre over the associated wireless communication network in order to perform the banking transactions.

The remote banking unit is preferably a mobile banking unit installed on a vehicle, such as a car, bus or train, and may be equipped with a group of banking service terminals, including terminals such as ATM's, passbook updating machines etc. The mobile banking unit and/or its individual banking service terminals, is or are equipped with mobile telephones with or without modems and with or without encryption devices.

The data processing centre may be constituted by an existing mainframe computer of the bank's data centre, which is correspondingly equipped with mobile telephones with or without modems and with or without encryption devices for data communication purposes.

The mobile banking unit and/or its individual banking terminals can dial-up and connect via the wireless mobile telephone network to the mainframe computer using the mobile telephones installed at both ends, thereby to perform banking transactions.

A mobile banking system embodying the present invention applies mobile telephone technology and its wireless communication network to banking operations and allows banks to offer their customers on-line banking transaction services at any location which is within reach of the mobile telephone network.

The invention thus provides a bank with (a) the possibility of establishing mobile banking system and offering mobile banking services to its customers and (b) the ability to connect their banking terminals like ATMs passbook updating machines, multi-media enquiry stations and the like to their mainframe computer in the data centre using mobile telephony and its associated wireless communication network, so as to provide banking services in any locations and/or on board transportation such as cars, buses and trains.

The mobile banking system proposed by the present invention should offer the banks lower operating costs and possible expansion of market coverage geographically to include more remote and less densely populated areas of a country. In turn, the customers could expect to have easier access and more convenient banking services with longer operating hours and lower fees. The invention should, therefore, facilitate commercial activities as a whole.

In order that the invention may be more readily understood, embodiments thereof will now be described, by way of example, with reference to the accompanying drawings, in which:
FIGURE 1 is a schematic diagram giving an overview of a mobile banking system embodying the present invention:
FIGURE 2 is a block diagram of the structure of one embodiment of a mobile banking unit with centralised communication control via a computer server incorporated in the mobile banking unit;
FIGURE 3 is a block diagram of the structure of another embodiment of a mobile banking unit without centralised control of communications;
FIGURE 4 is a block diagram of one example of a mobile banking unit incorporating a computer server; and
FIGURE 5 is a block diagram of an exemplary data centre of a bank.

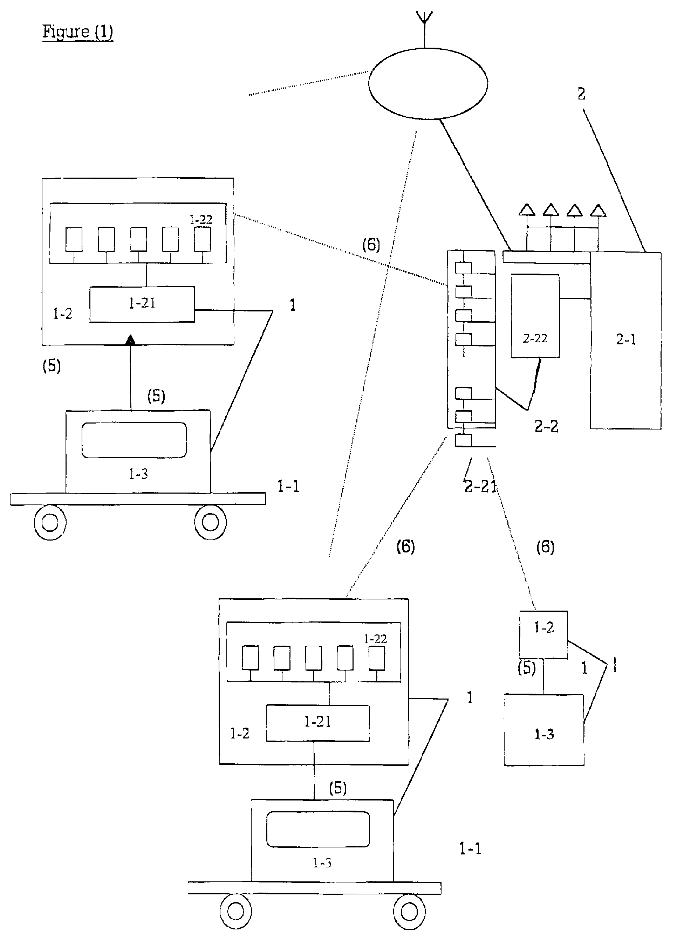

Referring to Figure 1, the illustrated mobile banking system embodying the present invention comprises mobile banking units 1 and a banking data centre 2. Any number of mobile banking units 1 and data centres 2 may be employed in the system and the use of a single data centre 2 and two mobile banking units 1 as depicted in the drawing is for the purposes of illustration only. The mobile banking units 1 should have no geographical boundary and could be situated within the same city, within different cities or even within different countries.

The mobile banking unit 1 may take the form of a car, a bus or a train carrying on board banking terminals 1-3 which are capable of performing on-line banking transactions. Thus, an ATM installed in a car and capable of communicating with a mainframe computer 2-1 of the data centre 2 via a mobile telephone 1-22 is the simplest form of mobile banking unit. Customers can make a deposit, a withdrawal, or an account transfer using the ATM as if it were installed in the lobby of a conventional branch bank.

Within the mobile banking unit 1, a computer server may be used to connect all the banking terminals 1-3, mobile telephones 1-22 and necessary peripherals, so that communication between the main frame computer 2-1 and the mobile banking unit 1 can be centralised within the banking unit. Alternatively, the individual banking terminals 1-3 of the mobile banking unit may be equipped with their own mobile telephones 1-22 and other necessary peripherals, so as to communicate directly with the mainframe computer 2-1 when performing transactions. As another possibility, a banking unit 1 could employ a combination of these communication modes for different banking terminals 1-3.

Within the context of the present invention, even if it is installed at a fixed site for a period of time instead of on a moving vehicle, the banking unit 1 is still considered to be a mobile banking unit, as long as it communicates with the bank's main frame computer 2-1 using a mobile telephone and the associated wireless communication network.

The data centre 2, and its mainframe computer 2-1, is normally located at the premises of the bank. It is the central data processing centre for all the banking terminals of the bank, including also the banking terminals 1-3 installed on the mobile banking unit 1. The banking terminals of the branch offices continue to be connected via the dedicated leased line network, whereas the terminals of the mobile banking unit 1 are connected to the data processing centre 2-1 by means of a mobile telephone 1-22, with or without a modem and/or encryption device 1-21, and its wireless communication network in order to process all kinds of banking transactions.

A mobile banking system embodying the present invention thus enables a bank to establish a mobile banking presence. The mobile banking unit 1 can be installed on any means of transport or movable object and may, in special circumstances, be installed at a site. The connection of the mobile banking unit 1 to the mainframe computer 2-1 is through the wireless mobile telephone communication network. Of course, the mobile banking unit 1 and/or its terminals 1-3 and the mainframe computer 2-1 must incorporate a mobile phone 1-22 with or without a modem and/or an encryption device 1-21.

To enhance the security of the data transmissions, encrypted data may be transmitted to and from the banking terminals 1-3 by separate message segments using different mobile telephone lines 6. On arrival, the data is reconstructed and decrypted by an encryption/decryption device 2-22 of data centre 2 prior to processing by the mainframe computer 2-1 to ensure the highest degree of security. It is believed that using a wireless network for data transmission in such an application is more secure and cost-effective.

The wireless communication network could be a satellite network or a microwave network or any other wireless communication network.

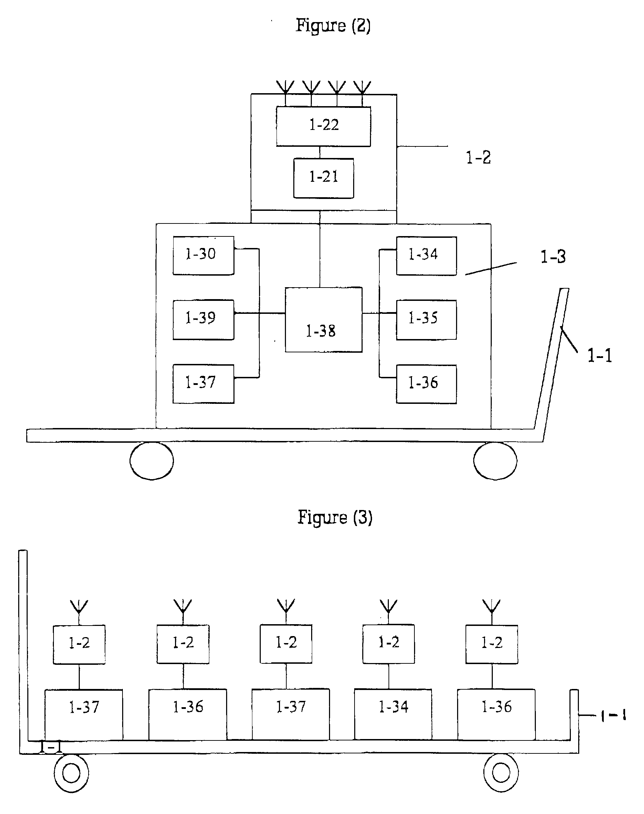

Figure 2 is a block diagram, showing the components of one embodiment of a mobile banking unit 1 having centralised control via an installed server.

The exemplary mobile banking unit 1 of Figure 2 consists of a moving object, such as a car 1-1, carrying on board a group of banking terminals 1-3, a wireless communication device 1-2, with or without a modem 1-21 and an encryption device 1-22. The individual banking terminals, such as ATM 1-36, cashier cheque issuing machine 1-35, telephone banking kiosk 1-34, passbook updating machine 1-39, tele-terminals 1-37 and alarm system 1-30, connect to the communication device 1-2 via computer server CPU 1-38.

For self-service equipment, the customers of the bank can operate the machine for services as if they were using the machines in the lobby of a bank, but behind the scenes data is transmitted via the wireless communication network by means of the installed communication device 1-2. The tele-terminal 1-37 is to be operated as usual by the staff of the bank.

The communication device 1-2, including the mobile telephones 1-22 with or without the modem and encryption device 1-21, may be installed within the mobile banking unit 1, as illustrated in Figure 2, or outside the mobile banking unit 1, as illustrated in Figure 1.

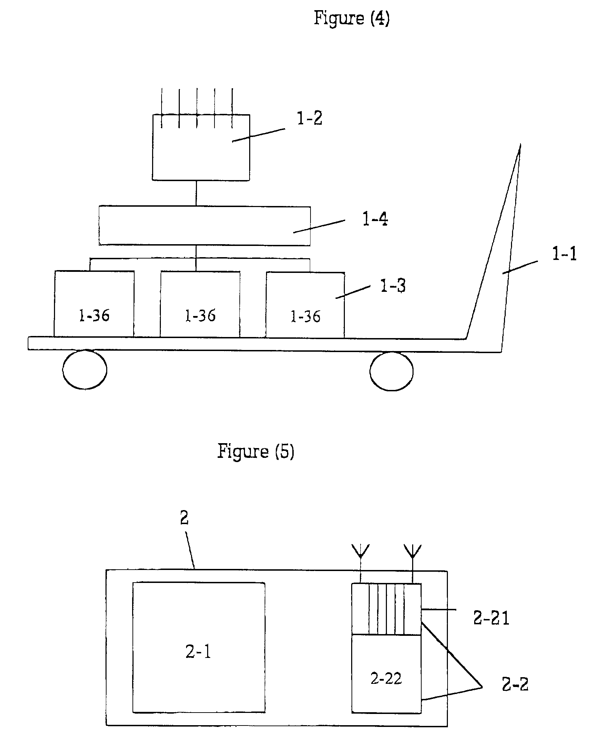

Figure 3 is a block diagram of the components of another embodiment of a mobile banking unit 1 which, in this case, does not employ centralised communication control.

The only difference between Figures 2 and 3 is that, in Figure 3, a communication device 1-2 is incorporated in each banking terminal 1-3, so that each banking terminal is capable of communicating with the mainframe computer 2-1 directly in order to process a transaction.

It is further envisaged that the mobile banking unit 1 may communicate with the data processing centre 2 using a combination of the two types of communication illustrated in Figures 2 and 3. For example, only the ATM 1-36 and the passbook updating machine 1-39 may have their own individual communication devices 1-2, and be able to communicate directly with the mainframe computer 2-1, whereas the other banking terminals may be connected to a common communication device 1-2 via a computer server 1-38.

In the event that there are bank staff on board the mobile banking unit 1, the staff may make use of the banking terminals to perform other banking services, such as the acceptance of cheque deposits and cheque withdrawals etc.

Figure 4 shows another example of a mobile banking unit 1, in which three ATMs 1-36 are connected to a single communication device 1-2 via a computer server 1-4.

Figure 5 illustrates schematically the structure of a data processing centre 2 of a bank. This centre comprises the mainframe computer 2-1 and mobile telephones 2-21, with our without a modem and with or without encryption device 2-22. The data processing centre 2 is connected to the mobile banking unit 1 using one or more mobile telephones 2-21 for data transmission via the mobile telephone wireless communication network in order to perform banking transactions.

The use of wireless means of communication in a mobile banking system embodying the present invention is expected to enhance data communication security and to help reduce the communication costs of a bank.

It will be appreciated that the invention is simple and cost effective and should prove a benefit both to the banks themselves and to their customers and the community.

## Claims

1. A mobile banking system comprising a data processing centre (2) for processing banking transactions and a remote banking unit (1) having one or more banking terminals (1-3) operable by a user to effect banking transactions, in which system the remote banking unit (1) incorporates a wireless communication device (1-2) including a mobile telephone (1-22) by which the remote banking unit (1) communicates with the data processing centre (2) over the associated wireless communication network in order to perform the banking transactions.

2. A mobile banking system according to claim 1, wherein the remote banking unit (1) is installed on a means of transport (1-1), such as a car, bus or train.

3. A mobile banking unit according to claim 1, wherein the remote banking unit (1) is installed at a site.

4. A mobile banking system according to any one of claims 1 to 3, wherein the remote banking unit (1) comprises banking terminals (1-3) in the form of self-service equipment (1-34, 1-36 etc.) and/or equipment (1-37) to be operated by bank staff.

5. A mobile banking system according to any preceding claim, wherein the remote banking unit (1) incorporates a computer server (1-38 or 1-4) via which a plurality of banking terminals (1-34, 1-35, 1-36, 1-37, 1-39 or 1-36) of the remote banking unit (1) are connected to a common wireless communication device (1-2) of the remote banking unit (1).

6. A mobile banking system according to any preceding claim, wherein one or more banking terminals (1-34, 1-36, 1-37) of the remote banking unit (1) is provided with its own individual wireless communication device (1-2) by which the banking terminal (1-34, 1-36, 1-37) can communicate directly with the data processing centre (2).

7. A mobile banking system according to any preceding claim, wherein the data processing centre (2) incorporates one or more mobile telephones (2-21) for communicating with the mobile banking unit (1).

8. A mobile banking system according to claim 7, wherein the mobile telephones (2-21) are connected to a mainframe computer (2-1) of the data processing centre (2).

9. A mobile banking system according to any preceding claim, wherein the wireless communications device of the remote banking unit (1) and the data processing centre include encryption devices (1-21 and 2-22).

10. A mobile banking system according to any preceding claim, wherein the wireless communication device (1-2) of the remote banking unit (1) and the data processing centre (2) incorporate modems (1-22 and 2-22).
